# EUROPÄISCHE PATENTANMELDUNG

(11) **EP 0 521 230 A1**
(43) Veröffentlichungstag der Anmeldung: **07.01.1993**
(21) Anmeldenummer: 91890125.7
(22) Anmeldetag: 19.06.1991
(51) Int. Cl.: B23D 15/12, B23D 17/02, B23D 17/04

(54) **Trenneinrichtung**

(71) Anmelder: BALINT, Ludwig, A-6911 Lochau (AT)
(72) Erfinder: BALINT, Ludwig, A-6911 Lochau (AT)
(74) Vertreter: Kliment, Peter

(57) **Zusammenfassung**

Antriebseinrichtung insbesondere für eine Trenneinrichtung mit einem drehbar gehaltenen Trennwerkzeug. Um bei einem solchen auf einfache Weise eine hohe Beschleunigung des Trennwerkzeuges zu erreichen, ist ein Schlaghammer (6) vorgesehen, der mit einer an dem drehbar gehaltenen Trennwerkzeug (4) angeordneten Schlagfläche (5) zusammenwirkt und der seinerseits von mindestens einer, an einem angetriebenen umlaufenden Massekörper (1) angeordneten Schlagnocke (2) beaufschlagt ist, welcher Massekörper (1) mit einer im wesentlichen konstanten, gegebenenfalls einstellbaren Geschwindigkeit angetrieben ist.

## Beschreibung

Die Erfindung bezieht sich auf eine Antriebseinrichtung insbesondere für eine Trenneinrichtung mit einem drehbar gehaltenen Trennwerkzeug.

Solche Trennwerkzeuge werden z.B. zum Abtrennen von Stangen oder Rohren verwendet. Dabei erfolgt der Antrieb für diese Werkzeuge meist in der Weise, daß diese über eine Kupplung zeitweise mit einem Antrieb gekuppelt werden.

Dabei ergibt sich einerseits der Nachteil eines hohen Verschleißes der Kupplung und außerdem wird dem Werkzeug aufgrund des doch almählichen Griffes der Kupplung nur eine eher geringe Beschleunigung erteilt, wodurch der Trennvorgang, insbesondere bei zähen Materialien entsprechend viel Energie erfordert und nur eine eher bescheidene Qualität der Schnittflächen erzielt werden kann.

Ziel der Erfindung ist es diese Nachteile zu vermeiden und eine Antriebseinrichtung der eingangs erwähnten Art vorzuschlagen, die sich durch einen einfachen Aufbau auszeichnet und eine hohe Beschleunigung des Trennwerkzeuges zu Beginn seines Weges ermöglicht.

Erfindungsgemäß wird dies dadurch erreicht, daß ein Schlaghammer vorgesehen ist, der mit einer an dem drehbar gehaltenen Trennwerkzeug exzentrisch zu dessen Drehachse angeordneten Schlagfläche zusammenwirkt und der seinerseits von mindestens einer, an einem angetriebenen in einer Kreisbahn umlaufenden Massekörper angeordneten Schlagnocke beaufschlagt ist, die an einer Stirnfläche des Schlaghammers zur Anlage bringbar ist, wobei der Massekörper mit einer im wesentlichen konstanten, gegebenenfalls einstellbaren Geschwindigkeit angetrieben ist.

Auf diese Weise ist es möglich dem Trennwerkzeug einen sehr kräftigen Impuls zu erteilen, der es entsprechend beschleunigt, bzw. das zu trennende Werkstück schlagartig belastet und dadurch das Abtrennen entsprechend erleichtert. Dabei kann der Verschleiß des Schlaghammers und der mit dieser zusammenwirkenden Schlagfläche bei Wahl entsprechender Materialien und deren Behandlung, wie z.B. Oberflächenhärtung u.dgl. in vertretbaren Grenzen gehalten werden.

Nach einem weiteren Merkmal der Erfindung kann vorgesehen sein, daß der Abstand zwischen dem Schlagkopf des in Ruhestellung befindlichen Schlaghammers und der Schlagfläche des in einer Raststellung befindlichen Werkzeuges größer ist, als die Abwicklung des Abschnittes des Weges der Schlagnocke in dem diese in Kontakt mit dem Schlaghammer ist.

Durch diese Maßnahmen ist sichergestellt, daß der Schlaghammer praktisch im freien Flug auf die Schlagfläche des Trennwerkzeuges aufprallt und seine Energie an dieses abgibt. Weiters wird dadurch auch verhindert, daß die Schlagnocke über den Schlaghammer direkt auf das Werkzeug einwirkt und es zu einem Stauchen des Schlaghammers kommt.

Bei einem bevorzugten Ausführungsbeispiel der Erfindung ist vorgesehen, daß der Schlaghammer in einer Führung axial verschiebbar gehalten ist, die um eine Achse schwenkbar gehalten und an eine Steuereinrichtung angelenkt ist, die den Schlaghammer in und aus dem Bewegungsweg der Schlagnocke bewegt.

Auf diese Weise läßt sich ein einwandfreies Ablaufen der Schlagnocke an dem Schlaghammer sicher stellen und außerdem ergibt sich dadurch die Möglichkeit den Schlaghammer nur bei Vorliegen bestimmter Gegebenheiten, wie entsprechende Lage des Werkzeuges und dessen Bereitschaft für einen Arbeitsschritt in die Bewegungsbahn der Schlagnocke einzuschwenken.

Um eine gute Führung des Schlaghammers und damit eine sehr genau definierten Auftreffpunkt desselben auf der Schlagfläche des Werkzeuges sicherzustellen, durch den sich sehr genau reproduzierbare Verhältnisse für das Werkzeug ergeben, kann weiters vorgesehen sein, daß in dem vom mit der bzw. den Schlagnocke(n) versehenen Massekörper abgewandten Ende der Führung diese schwenkbar gehalten und an ihrem anderen Ende über einen Lenker mit einem von einer mit dem Massekörper umlaufenden Kulisse gesteuerten Hebel verbunden ist.

Weiters kann vorgesehen sein, daß an dem Hebel der Steuereinrichtung der Führung des Schlaghammers eine Verriegelung angreift, die von einer die ordnungsgemäße Freigabe einer das vom Schlaghammer antreibbare verdrehbare Werkzeug in seiner Ruhestellung haltenden Verriegelungseinrichtung überwachenden Fühleinrichtung gesteuert ist und die den Hebel in einer den Schlaghammer außerhalb des Bewegungsweges der Schlagnocke haltenden Stellung blockiert solange das Werkzeug von dessen Verriegelungseinrichtung nicht freigegeben ist.

Auf diese Weise wird sichergestellt, daß der Schlaghammer nur dann in die Bewegungsbahn der Schlagnocke einschwenken kann, wenn sich das Werkzeug in einer definierten Lage befindet und in dieser von der Verrriegelungseinrichtung freigegeben wurde. Dadurch wird auf einfache und sichere Weise eine Beschädigung des Werkzeuges oder dessen Verriegelungseinrichtung bei Vorliegen abnormaler Zustände, z.B. nicht rechtzeitige Freigabe des Werkzeuges durch die Verriegelungseinrichtung, vermieden.

Die Erfindung wird nun anhand der Zeichnung näher erläutert. Dabei zeigen:
Fig. 1 schematisch die erfindungsgemäße Antriebseinrichtung,
Fig. 2 schematisch das Werkzeug und
Fig. 3 einen Schnitt durch das Werkzeug.

Der von einem nicht dargestellten Antrieb in Drehung versetzte Masseköper 1 weist zwei Schlagnocken 2 auf. Weiters ist dieser MAssekörper 1 mit einer Kulisse 3 drehfest verbunden und dreht sich mit einer im wesentlichen konstanten jedoch einstellbaren Drehzahl.

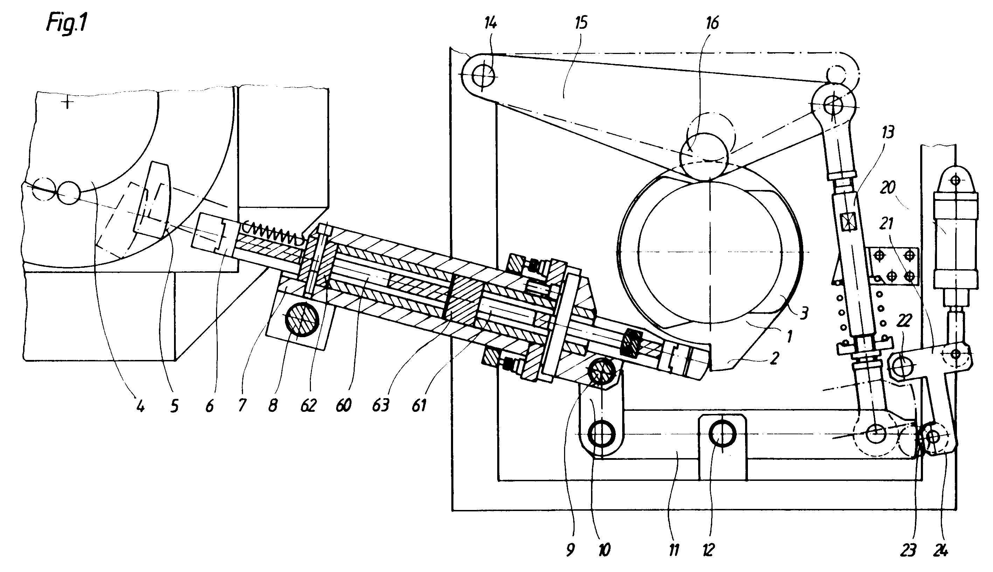

Das in der Fig. 1 nur schematisch angedeutete Werkzeug 4 ist auf einer drehbar gelagerten Welle drehfest gehalten und mit einer Schlagfläche 5 versehen.

Zwischen dem Massekörper 1 und dem Werkzeug 4 ist ein Schlaghammer 6 angeordnet, der in einer Führung 7 geführt ist.

Die Führung 7 ist um eine gestellfeste Achse 8 schwenkbar gehalten, wobei die Führung 7 in deren dem Werkzeug 4 zugekehrten Endbereich von dieser Achse 8 durchsetzt ist. Das dem Massekörper 1 zugekehrte Ende der Führung 7 ist über eine Achse 9 mit einem Lenker 10 verbunden, der seinerseits mit einem Hebel 11 verbunden ist, der um eine gestellfeste Achse 12 schwenkbar gehalten ist.

An dem zweiten Arm des Hebels 11 ist eine federnde Teleskopstange 13 angelenkt, die mit einem um eine gestellfeste Achse 14 schwenkbaren Arm 15 gelenkig verbunden ist, der eine an der Kulisse 3 ablaufende Rolle 16 trägt. Dabei ist der Arm 15 gegen die Kulisse 3 mittels einer nicht dargestellten Einrichtung, z.B. einer Feder oder einer mit einem Druckmedium beaufschlagten Kolben-Zylinderanordnung, vorgespannt, sodaß die Rolle 16 in ständigem Kontakt mit der umlaufenden Kulisse 3 gehalten wird.

In der in der Fig. 1 dargestellten Lage der einzelnen Bauteile ist die Rolle 16 in eine Vertiefung der Kulisse 3 eingesunken und daher der Hebel 11 über die Teleskopstange 13 niedergedrückt, sodaß der Schlaghammer 6 in die Bewegungsbahn der Schlagnocke 2 eingeschwenkt ist. Da der Massekörper 1 mit konstanter Geschwindigkeit umläuft, schlägt die Schlagnocke 2 gegen den Schlaghammer 6 und erteilt diesem einen entsprechenden Impuls, wodurch der Schlaghammer 6 beschleunigt wird und gegen das Werkzeug 4, bzw. dessen Schlagfläche 5 fliegt.

Zu diesem Zeitpunkt hat die Verriegelungseinrichtung des Werkzeuges 4, die durch einen mit einer konischen Spitze versehenen Bolzen 17, der in einer Buchse des Werkzeuges axial verschiebbar gehalten und von einer nicht dargestellten Steuereinrichtung in Abhängigkeit von der Stellung des drehbar gehaltenen Teiles 34 des Werkzeuges 4 und der Schlagnocke 2 gesteuert ist, das Werkzeug bereits freigegeben. Dabei ist das zu trennende Werkstück bereits in das Werkzeug eingeführt und entsprechend positioniert.

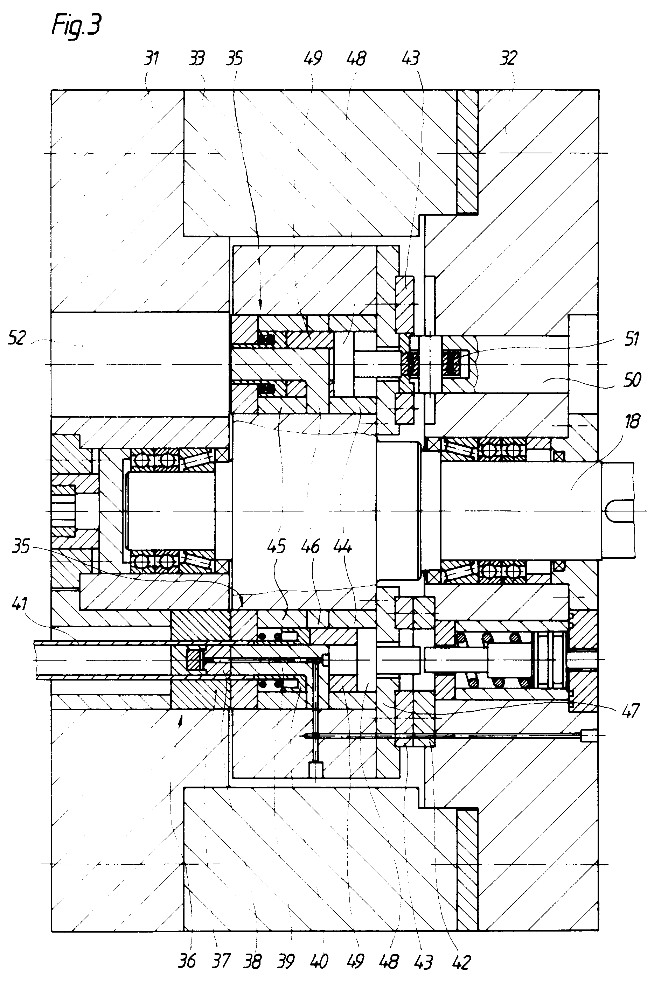

Trifft nun der Schlaghammer 6 auf die Schlagfläche 5 des Werkzeuges 4 auf, wobei aufgrund des Umstandes, daß der Abstand zwischen der Schlagfläche 5 und der dieser zugekehrten Stirnfläche des Schlaghammers 6 größer ist als der Abschnitt des Weges der Schlagnocke 2, in dem diese mit dem Schlaghammer in Kontakt bleibt, der Schlaghammer im freien Flug auf die Schlagfläche 5 auftrifft, so gibt dieser seine Energie an das Werkzeug ab und beschleunigt dieses, wodurch es zur Abtrennung des im Werkzeug 4 gehaltenen Werkstückes kommt. Letzteres wird noch später anhand der Fig. 3 näher erläutert.

Auf der Welle 18 des Werkzeuges 4 ist ein nicht dargestellter Bremsmotor angeordnet, der von einer die Drehgeschwindigkeit des Werkzeuges erfassenden und auswertenden, nicht dargestellten Steuereinrichtung in seiner Bremsleistung gesteuert ist und das Werkzeug derart abbremst, daß es nach einer Drehung um 180° zum Stillstand kommt. In dieser Lage wird der Stift 17 ausgeschoben und greift in eine entsprechende Vertiefung 19 des Werkzeuges 4 ein, wodurch dieses genau positioniert wird und das zu trennende Werkstück in das Werkzeug eingeführt werden kann.

In der Zwischenzeit hat sich der Massekörper 1 und mit diesem die Kulisse 3 weitergedreht, wodurch die Rolle 16 auf den erhöhten Bereich der Kulisse aufgelaufen ist und wodurch der Hebel 11 in die strichliert angedeutete Lage gebracht wurde. Damit wurde auch der Schlaghammer aus dem Bewegungsweg der Schlagnocke 2 ausgeschwenkt.

Mit dem Einrasten der Verrriegelungseinrichtung 17 des Werkzeuges 4 wird eine Verriegelung des Hebels 11 aktiviert. Diese besteht im wesentlichen aus einem mit einer Feder gegen die Verriegelungsstellung vorgespannten Elektromagneten 20, der an einem T-förmigen Hebel 21 angreift, der im Endbereich seines Querbalkens an einer gestellfesten Achse 22 drehbar gehalten ist und im freien Endbereich seines Längssteges eine Rolle 23 an einem seitlichen Ansatz 24 trägt.

Rastet nun die Verriegelungseinrichtung 17 in eine Vertiefung 19 des Werkzeuges 4 ein, so löst diese ein Signal aus, das den Elektromagneten 20 entregt und der T-förmige Hebel 21 daher im Gegenuhrzeigersinn verschwenkt wird. Da zu diesem Zeitpunkt die Rolle 16 auf dem erhöhten Bereich der Kulisse 3 aufliegt, ist der Hebel 11 in die strichliert angedeutete Stellung verschwenkt, sodaß der Schlaghammer 6 aus der Bewegungsbahn der Schlagnocke 2 herausgeschwenkt ist und die Rolle 23 das Ende des Hebels 11 untergreift. Damit ist der Hebel 11 in einer Lage verriegelt, in der der Schlaghammer 6 aus dem Bewegungsbahn der Schlagnocke 2 herausgeschwenkt ist.

Erst wenn das zu trennende Werkstück ordnungsgemäß in das Werkzeug eingeführt und dessen Verriegelungseinrichtung 17 wieder die Freigabestellung erreicht hat, wird der Elektromagnet 20 wieder erregt und nimmt seine in der Fig. 1 dargestellte Lage ein, wodurch der Hebel 11 wieder seine mit vollen Linien dargestellte Lage einnehmen kann, sobald die Rolle 16 in eine Vertiefung der Kulisse 3 einsinkt.

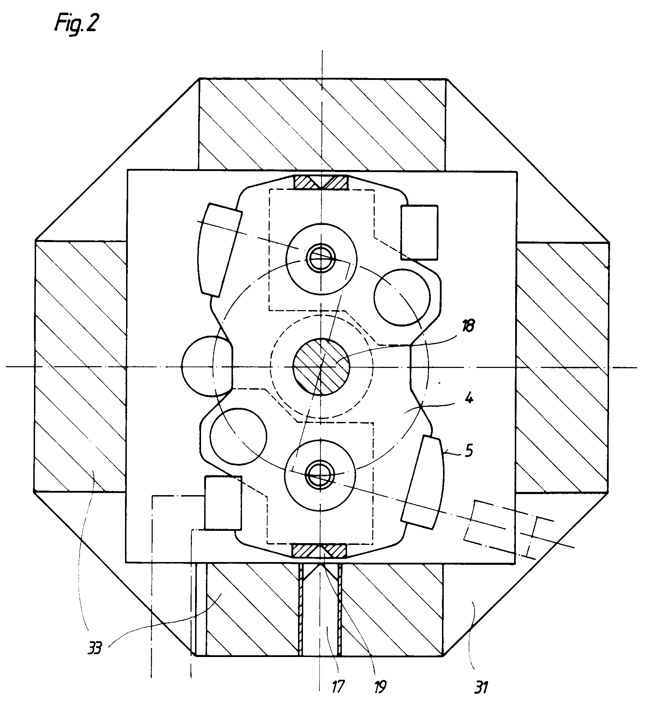

Das Werkzeug 4 besteht, wie aus den fig. 2 und 3 ersichtlich ist, im wesentlichen aus einem zwei Scheiben 31, 32 und vier diese verbindende Brückenstücke 33 bestehenden Gehäuse, in dem ein drehbarer Teil 34 gehalten ist. Zwischen den Brückenstücken 33 verbleiben in Umfangsrichtung Freiräume, in deren einen der Schlaghammer 6 eingreift, der in der Fig. 2 strichliert angedeutet ist.

In den beiden Scheiben 31, 32 ist die Welle 18 gelagert, auf der der verdrehbare Teil 34 des Werkzeuges 4 drehfest gehalten ist.

In der Ruhestellung des drehbaren Teiles 34 fluchtet eine der beiden Trenneinrichtungen 35 mit einer in der Scheibe 31 gehaltenen Trenneinrichtung 36.

Diese Trenneinrichtungen bestehen im wesentlichen aus einem Ringmesser 37, in das das zu trennende Rohr 41 mit einem engen Preßsitz einpreßbar ist und einem geteilten Dorn 38, 39, auf den das zu trennende Rohr mit Preßsitz aufpreßbar ist. Dabei liegt die Teilungsebene des Dornes 38, 39 genau in der Berührungsebe der Stirnflächen der Ringmesser 37. Weiters ist ein federbelasteter, in den Ringspalt zwischen dem Ringmesser 37 des drehbaren Teiles 34 und dessen Dorn 39 eingreifender Auswerfer 40 vorgesehen, der gleichzeitig als Anschlag für das zu trennende Rohr 41 dient.

Im Bereich der Trenneinrichtung 36 ist an der Scheibe 32 eine Abstützring 42 angeordnet, an den einer der beiden am drehbaren Teil 34 angeordneten Gegenringe 43 anliegt und damit eine gute Übertragung der beim Einpressen des Rohres 41 in die Trenneinrichtungen 35, 36 erforderlichen Kräfte auf die Scheibe 32 ermöglicht.

Die Dorne 39 sind über in entsprechende Bohrungen des Teiles 34 eingesetzte Hülsen 44, 45 und einen an jeden Dorn 39 angeformten, Durchbrechungen aufweisenden Flansch 46 an einem mit dem Teil 34 verbundenen Stützring abgestützt.

In diese Durchbrechungen der Flansche der Dorne 39 greifen an einem Stößel 48 angeordnete Zapfen 49 ein. Dieser Stößel 48 wird von einem im Bereich der oberen Raststellung des drehbaren Teiles 34 in der Scheibe 32 angeordneten Stoßzapfen 50 gesteuert, der im Bereich seines einen Endes ein Kugellager 51 mittels einer eine Querbohrung durchsetzenden Achse hält.

Bei einer Drehung des Teiles 34 um 180° kommt das freie Ende des Stößels 48 in Kontakt mit dem Außenring des Kugellagers 51 und wird durch diesen in Richtung der Scheibe 31 gedrängt. Dadurch kommen die Zapfen 49 des Stößels 48 an dem Ausstoßer 40 zur Anlage und drängen diesen gegen die Scheibe 31, sodaß das abgetrennte Rohrstück aus dem Ringmesser 37 gedrückt wird und in die Bohrung 52 der Scheibe 31 fällt, aus der es einfach entfernt werden kann.

Die Führung 7 umschließt den Querschnitt des Schlaghammers 6 im wesentlichen vollständig. Weiters weist der Schlaghammer 6 Durchbrechungen 60, 61 auf, die von Führungskörpern 62, 63 durchsetzt sind.

## Patentansprüche

1. Antriebseinrichtung insbesondere für eine Trenneinrichtung mit einem drehbar gehaltenen Trennwerkzeug, **dadurch gekennzeichnet**, daß ein Schlaghammer (6) vorgesehen ist, der mit einer an dem drehbar gehaltenen Trennwerkzeug (4) angeordneten Schlagfläche (5) zusammenwirkt und der seinerseits von mindestens einer, an einem angetriebenen umlaufenden Massekörper (1) angeordneten Schlagnocke (2) beaufschlagt ist, welcher Massekörper (1) mit einer im wesentlichen konstanten, gegebenenfalls einstellbaren Geschwindigkeit angetrieben ist.

2. Antriebseinrichtung nach Anspruch 1, **dadurch gekennzeichnet**, daß der Abstand zwischen dem Schlagkopf des in Ruhestellung befindlichen Schlaghammers (6) und der Schlagfläche (5) des in einer Raststellung befindlichen Werkzeuges (4) größer ist, als die Abwicklung des Abschnittes des Weges der Schlagnocke (2) in dem diese in Kontakt mit dem Schlaghammer (6) ist.

3. Antriebseinrichtung nach Anspruch 1 oder 2, **dadurch gekennzeichnet**, daß der Schlaghammer (6) in einer Führung (7) axial verschiebbar gehalten ist, die um eine Achse schwenkbar gehalten und an eine Steuereinrichtung (11, 13, 15, 16,) angelenkt ist, die den Schlaghammer (6) in und aus dem Bewegungsweg der Schlagnocke (2) bewegt.

4. Antriebseinrichtung nach einem der Ansprüche 1 bis 3, **dadurch gekennzeichnet**, daß in dem vom mit der bzw. den Schlagnocke(n) (2) versehenen Massekörper (1) abgewandten Ende der Führung (7) diese schwenkbar gehalten und an ihrem anderen ende über einen Lenker (9) mit einem von einer mit dem Massekörper (1) umlaufenden Kulisse (3) gesteuerten Hebel (11) verbunden ist.

5. Antriebseinrichtung nach einem der Ansprüche 1 bis 4, **dadurch gekennzeichnet**, daß an dem Hebel der Steuereinrichtung (11, 13, 15, 16) der Führung (7) des Schlaghammers (6) eine Verriegelung (20 bis 24) angreift, die von einer die ordnungsgemäße Freigabe einer das Werkzeug (4) in seiner Ruhestellung haltenden Verriegelungseinrichtung (17) überwachenden Fühleinrichtung gesteuert ist und die den Hebel (11) in einer den Schlaghammer (6) außerhalb des Bewegungsweges der Schlagnocke (2) haltenden Stellung blockiert solange das Werkzeug (4) von dessen Verriegelungseinrichtung (17) nicht freigegeben ist.
